# EUROPEAN PATENT SPECIFICATION

(11) **EP 3 248 923 B1**
(45) Date of publication and mention of the grant of the patent: **22.04.2020**
(21) Application number: 16740241.1
(22) Date of filing: 21.01.2016
(51) Int. Cl.: B65H 27/00, F16C 13/00

(54) **ROLLER AND METHOD FOR PRODUCING THERMOPLASTIC RESIN FILM ROLL**
WALZE UND VERFAHREN ZUR HERSTELLUNG EINER THERMOPLASTISCHEN KUNSTSTOFFFOLIENROLLE
ROULEAU ET PROCÉDÉ DE FABRICATION DE ROULEAU DE FILM DE RÉSINE THERMOPLASTIQUE

(30) Priority: 23.01.2015 JP 2015010857
(43) Date of publication of application: 29.11.2017
(73) Proprietor: Toray Industries, Inc., Tokyo 103-8666 (JP)
(72) Inventor: TAKADA, Takahiro, Otsu-shi Shiga 520-8558 (JP); ICHINOMIYA, Takashi, Otsu-shi Shiga 520-8558 (JP); MATSUMOTO, Tadashi, Otsu-shi Shiga 520-8558 (JP)
(74) Representative: Hoefer & Partner Patentanwälte mbB
(86) International application number: PCT/JP2016/051666
(87) International publication number: WO 2016/117634

(56) References cited:
- EP-A2- 0 431 907
- JP-A- H03 231 835
- JP-A- H08 108 470
- JP-A- 2004 251 373
- JP-A- 2007 169 698
- JP-A- 2008 081 239
- JP-A- 2008 081 239
- JP-A- 2011 005 777
- JP-A- 2011 005 777
- US-A1- 2002 166 234

## Description

### Technical Field

The invention relates to a roller and a production method for a thermoplastic resin film roll.

### Background Art

To convey a thermoplastic resin film, a nip roller is sometimes used for the purpose of increasing the friction force thereof on a roller and therefore preventing slip and of pressurizing it for embossing. For example, as in Patent Document 1, in the case where a surface of a thermoplastic resin film is subjected to embossing, the film heated is nipped between a nip roller and a roller having an embossing surface so that the film surface is provided with protuberances and depressions. Furthermore, as in Patent Document 2, in the case where the drawing of a film is performed in a film formation process for a thermoplastic resin film, the film heated is drawn by introducing it in between drawing rollers operated with a circumferential speed difference while nipping the film between a drawing roller and a nip roller so that the film and the drawing rollers do not slip. As the foregoing nip roller, a roller covered with a flexible rubber is used in order to carry out uniform nipping despite thickness irregularities of the film, bend, protuberances and depressions of the rollers, etc.

However, the rubber on the nip roller surface chips off due to abrasion under a load of nipping, and abrasion powder contaminates the film and results in defects, so that it is inevitable to replace a nip roller in a short cycle.

With regard to such a problem, Patent Document 2 uses a silicone rubber high in strength even under high temperatures as a rubber material of the nip roller in the case where a film is drawn. However, in addition to high pressure and tangential force, neck-in of the film increases the pressure on edge portions, so that abrasion is not successfully eliminated. With regard to this, Patent Document 2 proposes that a nip roller be subjected a taper cutout process so that the diameter gradually becomes smaller from locations corresponding to film edge portions toward the roller's ends so as to reduce the pressures on the edge portions and that circumferential speed differences between a central portion and end portions be eliminated to reduce the abrasion of a nip roller surface.

Furthermore, Patent Documents 3 and 4 propose that the outermost layer of a nip roller be provided with a layer of an amorphous carbon coat that is strong against abrasion to improve the durability of the nip roller.

### Prior Art Documents

### Patent Documents

Patent Document 1: Japanese Unexamined Patent Publication (Kokai) No. 2005-200465
Patent Document 2: Japanese Unexamined Patent Publication (Kokai) No. HEI 8-108470
Patent Document 3: Japanese Unexamined Patent Publication (Kokai) No. 2004-251373
Patent Document 4: Japanese Unexamined Patent Publication (Kokai) No. 2008-081239

### Summary of the Invention

### Problems to be Solved by the Invention

However, the proposals made in Patent Document 2, while being able to reduce the load by the film edge portions to some extent, do not successfully make considerable improvement on abrasion because of insufficient abrasion strength of the rubber in connection with the deformation caused by high pressure load and draw tension during drawing.

Furthermore, the proposals by Patent Documents 3 and 4 are made for a nip roller that is used in a wind-up apparatus for a film at normal temperature, and the documents do not disclose a method for coating a nip roller surface that is used in a heating process of the aforementioned embossing, a longitudinal drawing process, etc.

Accordingly, an object of the invention is to provide a nip roller that has sufficient heat resistance and abrasion strength in a process in which high load acts as in drawing and which involves the heating of the film.

### Means for Solving the Problems

In the roller of the invention that achieves the foregoing object, a surface of a substantially cylindrical core is provided with a layer of a rubber, the rubber has a change in hardness in a heat aging test at 150°C for 72 hours according to JIS K6257:2010 which is less than or equal to 15 degrees in type A durometer hardness according to JIS K6253:2012, and a surface of the layer of the rubber is provided with a layer of an amorphous carbon coat. Here, the "substantially cylindrical core" refers to a core whose overall shape is cylindrical or approximately cylindrical and includes a core having a shape whose diameter changes to some extents depending on locations in an axis direction. Concretely, such changes are preferred to be changes in diameter within the range of ±10 mm. This also includes a crown shape whose central portion in the axis direction has a larger diameter than both end portions. Furthermore, the "amorphous carbon coat" refers to a hard coat of amorphous carbon or carbon having amorphousness as a stack of crystals. Furthermore, the change in hardness being less than or equal to 15 degrees in the type A durometer hardness according to JIS K6253:2012 refers to the change being less than or equal to 15 degrees regardless of whether the change is in the increasing direction (hardening due to crosslinking) or the decreasing direction (softening due to main-chain scission).

Furthermore, in a roller of the invention, the rubber has in a main chain a carbon-carbon double bond, and a hydrocarbon-based hydrophobic layer is formed between the rubber layer and the layer of the amorphous carbon coat.
Here, the "hydrocarbon-based hydrophobic layer" is a chemical compound layer that contains hydrocarbon and that has a property of repelling water molecules and being not readily compatible with water. The hydrocarbon-based hydrophobic layer that is obtained by reforming the rubber surface refers to being in a state in which the number of carbon-carbon double bonds is smaller than in ordinary rubber.

Furthermore, in a roller of the invention, the rubber is a hydrogenated nitrile rubber. Here, the hydrogenated nitrile rubber is a rubber in which hydrogen has been added to part of carbon-carbon double bonds of a nitrile rubber and which has an enhanced heat resistance while having carbon-carbon double bonds, and the nitrile rubber is a copolymer of acrylonitrile and 1,3-butadiene. Incidentally, the hydrogenated nitrile rubber and the nitrile rubber are both classified into a diene-based rubber.
Furthermore, in a roller of a preferred form of the invention, a roller surface parallel to a center rotation axis of the roller is provided with a linear or curved cut-out portion formed so that a diameter of the roller becomes smaller toward a roller end.

Furthermore, in a roller of the invention, a surface of a substantially cylindrical core is provided with a layer of hydrogenated nitrile rubber and a surface of the layer of the rubber is provided with a layer of an amorphous carbon coat.

Furthermore, a production method for a film roll of the invention is a production method for a film roll in which a process where a sheet-shaped molten resin prior to the forming of a thermoplastic resin film or a thermoplastic resin film at 70°C or higher is nipped between a nip roller and a conveying roller and conveyed or processed is carried out and then the film is wound up into a roll shape and in which the nip roller is the roller of the invention.
Here, the "nip" means to pinch a film between a pair of rollers. Furthermore, the "nip roller" is a roller which is a roller for pinching a film on a roller and whose surface has been covered with a material having flexibility, such as a rubber.
Furthermore, the "conveying roller" is a roller for conveying a film continuous in the lengthwise direction from upstream to downstream in production processes.

Furthermore, another production method for a film roll of the invention is a production method for a film roll in which a process where a thermoplastic resin film at 70°C or higher is nipped between a nip roller and a conveying roller and drawn is carried out and then the film is wound up into a roll shape and in which the nip roller is the roller of the invention.

### Advantageous Effects of the Invention

According to the invention, in a process which involves the heating of a film and in which high load acts, a nip roller whose rubber layer having heat resistance is provided with a layer of an amorphous carbon coat that has abrasion resistance is used, so that abrasion of the nip roller is reduced and the nip roller can be used for a long period. Furthermore, the defect caused by abrasion powder from the nip roller can be prevented, leading to quality improvement of the film.

### Brief Description of the Drawings

[Fig. 1] Fig. 1 is a schematic side view of a production method for a film roll which is an embodiment of the invention.
[Fig. 2] Fig. 2 is a sectional view of a roller that is an embodiment of the invention which is viewed from a lateral direction.
[Fig. 3] Fig. 3 is a sectional view of a roller that is another embodiment of the invention which is viewed from a lateral direction.
[Fig. 4] Fig. 4 is a schematic side view of a production method for a film roll which is another embodiment of the invention.

### Description of Preferred Embodiments

Preferred embodiments of a roller and a production method for a thermoplastic resin film roll according to the invention will be described in detail hereinafter with reference to the drawings.

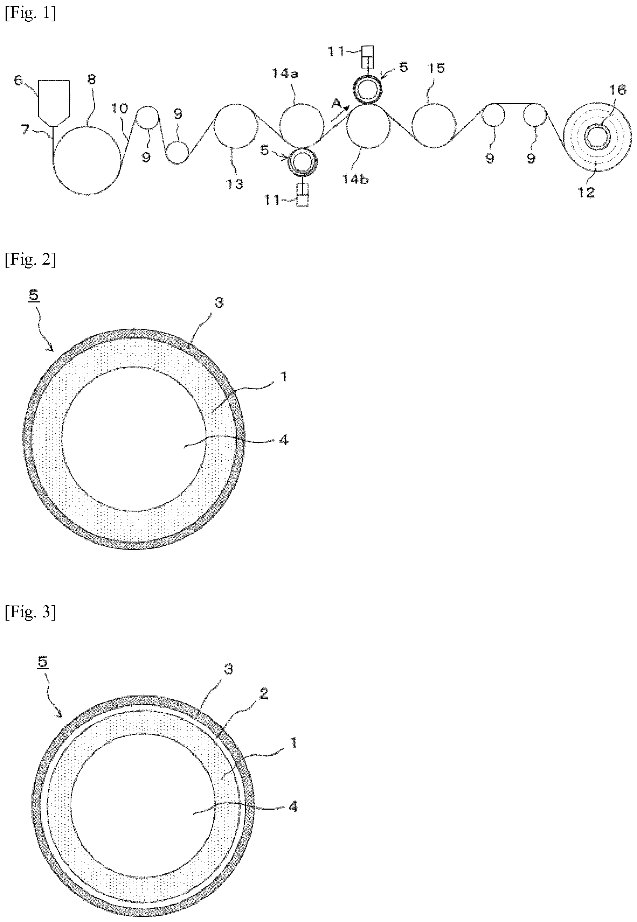

Fig. 1 is a schematic side view illustrating an example of a production method for a film roll in the case where a roller of the invention is used as a nip roller in a drawing process for a thermoplastic resin film. In Fig. 1, a molten resin extruded from an extruder is discharged through a die 6 that has a slit-shaped discharge opening to form a sheet-shaped molten resin 7, which is rapidly cooled by a cooling drum 8 so as to be formed as a film 10. After that, the film 10 is conveyed by guide rollers 9 as appropriate and is heated to soften by a pre-heating roller 13 through which a heat medium is passed. The film 10 is then drawn in a film conveying direction A due to a circumferential speed difference between a drawing roller 14a and a drawing roller 14b and then cooled by a cooling roller 15. After that, the film 10 is conveyed while being controlled in speed and tension by guide rollers 9 as appropriate and by a wind-up apparatus and the like, so that a wound-up film roll 12 is produced on a winding core 16. Incidentally, the drawing roller 14a and the drawing roller 14b will hereinafter be sometimes termed the drawing rollers 14.

Herein, as thermoplastic resins that form films to which the invention is applicable, there are polyolefin resins, such as polyethylene, polypropylene, and polymethylpentene, polyamide resins, such as nylon 6 and nylon 66, polyester resins, such as polyethylene terephthalate, polybutylene naphthalate, polytrimenthylene terephthalate, polyethylene-p-oxybenzoate, poly-1,4-cyclohexylenedimethylene terephthalate, polycarbonate resins, and polyester resins obtained by copolymerizing polyethylene terephthalate or the like with, as a copolymerization component, for example, a diol component, such as diethylene glycol, neopentyl glycol, or polyalkylene glycol, a dicarboxylic acid component, such as adipic acid, sebacic acid, phthalic acid, isophthalic acid, or 2,6-naphthalene dicarboxylic acid as well as polyacetal resins, polyphenylene sulfide resins, etc.

Each roller and the winding core 16 are rotationally supported by a bearing and the bearing is supported by a frame as appropriate. A nip roller 5 and each guide roller 9 may be a driven roller that is rotated by friction force from the film 10 or may be a driving roller for which a motor or the like is used. It is preferable that the cooling drum 8, the pre-heating roller 13, the drawing roller 14, the cooling roller 15, and the winding core 16 be driving rollers for which motors or the like are used. In the case where a roller is driven by a motor or the like, it is preferable that the rotation speed of the roller be substantially the same as the conveying speed of the film 10 so as to avoid the roller and the film 10 slipping to form scratch defects on the surface of the film 10. Furthermore, when the film 10 is drawn, the film 10 is nipped by the drawing roller 14 and the nip roller 5 so that a draw position is fixed. As a mechanism for nipping the film 10, for example, a pressurizing apparatus, such as air cylinders 11, is used at both axis ends of the roller to nip the film 10 on the drawing roller 14. Furthermore, after the film 10 is drawn in the conveying direction A, a tenter oven that draws the film 10 in a width direction, a trimming apparatus that removes edge portions from the film 10, a thickness measurer, etc. may be disposed as appropriate.

Here, the nip roller 5 is a roller having a construction shown in Fig. 2 or Fig. 3 in the invention.

Fig. 2 is a sectional view schematically illustrating an example construction of the roller of the invention. In a drawing process in Fig. 1, the nip roller 5 receives high-pressure heat load under high temperature. To withstand such load, the roller, as shown in Fig. 2, has a rubber layer 1 on an outer side of a core 4 and has an amorphous carbon coat 3 as an outermost layer. As a material of the core 4, a material having a rigidity and a strength capable of withstanding high pressure due to nipping is preferable, and a metal, such as steel or aluminum, a carbon fiber-reinforced resin, etc. are suitable. Furthermore, in the drawing process in Fig. 1, the film temperature is often a high temperature that is greater than or equal to 70°C because the film 10 is softened by bringing the film temperature to or above the molecular diffusion temperature or the glass transition point. As means for heating the film 10 at that time, radiation from an infrared heater or heat conduction from a heating roller through which a heat medium is passed (the drawing roller 14 may be provided as a heating roller or a heating roller, other than what are depicted, may be added) is often used. Therefore, since the nip roller 5 and the film 10 come to have high temperatures due to heat from the heating means, the rubber of the surface of the nip roller 5 needs to have high heat resistance. As an indicator that indicates heat resistance, a change in hardness before and after a heat aging test is used as a reference in the invention. Concretely, the rubber layer 1 employs a rubber that satisfies a condition that a change in hardness in a heat aging test at 150°C for 72 hours according to JIS K6257:2010 is less than or equal to 15 degrees in the type A durometer hardness according to JIS K6253:2012. Preferred examples that satisfy such a heat resistance are a silicone rubber, a fluorine rubber, a chlorosulfonated polyethylene rubber, a hydrogenated nitrile rubber, etc.

Meanwhile, in order to withstand high load, abrasion resistance is needed. The amorphous carbon coat 3 adopted in the invention is a great deal greater in hardness than rubber and the like and strong against abrasion and therefore has high durability. The amorphous carbon coat 3 is, as stated above, a hard film of carbon having a specific solid structure (amorphousness as an amorphous or crystal stack). For example, use of a plasma CVD (chemical vapor coat formation) that uses a hydrocarbon-based gas, such as methane, acetylene, or ethylene, allows formation of a hard coat of carbon on a soft layer of rubber or the like. This coat is called a diamond-like carbon coating (DLC coating). As for the coat formation method for the amorphous carbon coat 3, it suffices that the method described in Japanese Unexamined Patent Publication (Kokai) No. 2008-081239 is adopted.

Furthermore, for close contact between the amorphous carbon coat 3 and the silicone rubber or the like, utilization of an adhesive suffices. Incidentally, since in the invention, the amorphous carbon coat 3 is formed on the surface of the rubber layer 1, which is relatively soft, it is preferable that the amorphous carbon coat 3 be able to follow the deformation of the rubber layer 1. To this end, it is also preferable to form small cracks in the hard coat.

As for the thickness of the amorphous carbon coat 3, if the coat is excessively thin, there are cases where formation of the coat with a uniform thickness is difficult and, on the other hand, if the coat is excessively thick, there are cases where the flexibility of the rubber is inhibited; therefore, a thickness of 1 µm to 10 µm is preferable and a thickness of 3 µm to 10 µm is more preferable.

Furthermore, as for the nip roller 5, in the case where a counter roller bends to a great extent, it is preferable that the nip roller 5 have a crown shape whose outside diameter becomes smaller from a central portion toward end portions in the width direction, in order to obtain a pressing force uniformly along the width direction. Furthermore, the nip roller 5 may be provided with taper cut-out working as in Japanese Unexamined Patent Publication (Kokai) No. HEI 8-108470 or the core 4 may have a structure as in Japanese Unexamined Patent Publication (Kokai) No. 2010-149983.

Furthermore, as for the rubber layer 1 of the nip roller 5, a rubber that allows the amorphous carbon coat 3 to be firmly adhered is more preferable than a rubber that is difficult to adhere, such as silicone or fluorine rubber. Further, it is more preferable that the rubber layer 1 be of a heat-resistant rubber having carbon-carbon double bonds in its main chain and, as shown in Fig. 3, a hydrocarbon-based hydrophobic layer 2 be formed between the rubber layer 1 and the layer of the amorphous carbon coat 3. Here, a carbon-carbon double bond is a condition for the rubber layer 1 which is needed in order to form the hydrocarbon-based hydrophobic layer 2 needed in order to increase the force of sticking to the amorphous carbon coat 3 without using an adhesive. The layer of the amorphous carbon coat 3 and the rubber layer 1 stick to each by intermolecular force. If the intermolecular force is small, the sticking force between the layer of the amorphous carbon coat 3 and the rubber layer 1 is small, so that it happens that mechanical friction causes the layer of the amorphous carbon coat 3 to peel from the rubber layer 1. It is presumed that, by causing atoms having great electronegativity to undergo addition reactions with carbon-carbon double bonds of the rubber through a chemical process, the hydrocarbon-based hydrophobic layer 2 will be formed on the surface of the rubber layer 1 so that the intermolecular force with the amorphous carbon coat 3 will increase and the sticking force between the rubber layer 1 and the layer of the amorphous carbon coat 3 will increase. In particular, halogens (e.g., chlorine and bromine), various acids (e.g., halogenated hydrogen, sulfuric acid, carboxylic acid) can be easily added to carbon-carbon double bonds, resulting in the carbon-carbon double bonds changing into single bonds. Measurement of the hydrocarbon-based hydrophobic layer 2 is performed as follows. When the surface of the hydrocarbon-based hydrophobic layer 2 is wetted with distilled water, determination is made on the basis of the distilled water being repelled to form droplets. If the contact angle between the hydrocarbon-based hydrophobic layer 2 and the distilled water is greater than or equal to 60°, it is determined that the hydrocarbon-based hydrophobic layer 2 has a hydrophobicity.

Furthermore, it has been found that a preferable example of the rubber layer 1 is a diene-based rubber having in a main chain a carbon-carbon double bond and that, in particular, a hydrogenated nitrile rubber provided with the hydrocarbon-based hydrophobic layer 2 formed by causing addition reaction of atoms having great electronegativity can obtain a firm sticking force with respect to the amorphous carbon coat 3 and can also obtain a heat resistance that satisfies the condition that the change in hardness in a heat aging test at 150°C for 72 hours according to JIS K6257:2010 be less than or equal to 15 degrees in the type A durometer hardness according to JIS K6253:2012. Since the hydrogenated nitrile rubber has carbon-carbon double bonds in its main chain, halogens (chlorine, bromine) having great electronegativity can be added by a chemical process. The hydrogenated nitrile rubber, after the halogenation reaction, becomes high in the sticking property with respect to the amorphous carbon coat 3, so that a hard coat can be formed on the rubber without using means of adhesion or the like. In particular, this achieves firmer sticking than use of an adhesive with respect to a mold-releasing material, such as silicone, and is therefore suitable. Furthermore, the hydrogenated nitrile rubber is a rubber in which the double bonds of butadiene contained in the main chain of nitrile rubber have been partly hydrogenated, and has smaller amount of double bonds than the nitrile rubber, so that the hydrogenated nitrile rubber less easily undergo the thermal degradation caused by molecular chain scission under high temperature and has high heat resistance. Due to this, heat resistance of the rubber layer 1, the heat resistance that the amorphous carbon coat 3, such as DLC coating, has, and the firm sticking force between the rubber layer 1 and the amorphous carbon coat 3 can be obtained, so that even in a longitudinal drawing process in which high pressure and great tangential force act under high temperature, abrasion can be prevented and therefore the nip roller 5 can be used for a long period. A drawn film through the use of such a roller is free from attachment of abrasion powder and scratches and is excellent in the physical property regarding drawing, and therefore can produce a film roll 12 that has high quality and high physical property.

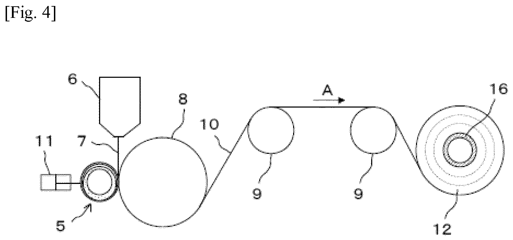

Fig. 4 is a schematic side view illustrating a production method for a film roll in the case where a roller that is an embodiment of the invention is used as a nip roller in an embossing apparatus for a thermoplastic resin film. A construction shown in Fig. 4 is substantially the same as the film roll production method illustrated in Fig. 1, in which a molten resin extruded from an extruder is discharged through a die 6 that has a slit-shaped discharge opening to form a sheet-shaped molten resin 7, which is rapidly cooled by a cooling drum 8 so as to be formed as a film 10. At this time, the cooling drum 8 has an embossing surface and the film 10 is pressed against the cooling drum 8 by the nip roller 5 of the invention so that the surface of the film 10 is embossed. Because the temperature of the sheet-shaped molten resin 7 is greater than or equal to the melting point, the temperature thereof is often a high temperature greater than or equal to 70°C. The rubber on the surface of the nip roller 5 of the invention has high heat resistance and therefore is suitable. After that, the film 10 is conveyed by guide rollers 9 and the like and then wound up on a winding core 16 to form the film roll 12.

### EXAMPLES

Hereinafter, concrete descriptions will be made by illustrating examples; however, the invention is not restricted at all by these examples.

### [Example 1]

Using a production apparatus for a film roll illustrated in Fig. 1, polyethylene terephthalate resin was melted by an extruder and discharged from the die 6 while being metered by a gear pump, so as to form a sheet-shaped molten resin 7, which was rapidly cooled by the cooling drum 8 whose temperature was adjusted so that the film temperature was 35°C. Thus, the resin was formed as a film 10 having a width of 2200 mm and an average thickness of 400 µm. The cooling drum 8 was set at a rotation speed of 90 m/min. The pre-heating roller 13, the drawing roller 14, and the cooling roller 15 were rollers through which a heat medium was passed. The obtained film 10 was heated by the pre-heating roller 13 and the drawing roller 14 so that the temperature of the film surface was 130°C. After that, the film 10 was cooled by the cooling roller 15 so that the temperature of the film surface was 35°C. The pre-heating roller 13, the drawing roller 14, and the cooling roller 15 are each a driving roller having a surface length of 2400 mm and an outside diameter of 300 mm. The material of a main body thereof was STKM13A prescribed in JIS G3445:2010 and the surface thereof had a hard chrome plated coat. The rotation speeds of the pre-heating roller 13 and the drawing roller 14a were 90 m/min and the rotation speeds of the drawing roller 14b and the cooling roller 15 were 650 m/min. The film 10 was subjected to longitudinal drawing by the speed difference between the drawing roller 14a and the drawing roller 14b.

As the nip roller 5, a roller illustrated in Fig. 2 was used. The pressure by nipping was 5 kN/m. The nip roller 5 had a surface length of 2400 mm and an outside diameter of 200 mm, and the rubber layer 3 thereof had a thickness of 10 mm and was of a silicone rubber having a hardness of 70°. On the silicone rubber, a DLC coating having a coat thickness of 1 µm was formed as an amorphous carbon coat 3. As for the silicone rubber in this example, the change in hardness in a heat aging test at 150°C for 72 hours according to JIS K6257:2010 was 0 degree, which is less than or equal to 15 degrees, in the type A durometer hardness according to JIS K6253:2012. Furthermore, the silicone rubber does not have a carbon-carbon double bond and does not form a hydrocarbon-based hydrophobic layer 2. Therefore, an adhesive was used to secure a sticking force with respect to the DLC coating. The material of the core 4 was STKM13A. The drawn film 10 was conveyed by the guide rollers 9 to obtain a wound-up film roll 12 on the winding core 16.

### [Example 2]

As the nip roller 5, a roller illustrated in Fig. 3 was used, and the rubber layer 3 thereof had a thickness of 10 mm and was of a hydrogenated nitrile rubber having a hardness of 70°. As for the hydrogenated nitrile rubber, the change in hardness in a heat aging test at 150°C for 72 hours according to JIS K6257:2010 was 10 degrees, which is less than or equal to 15 degrees, in the type A durometer hardness according to JIS K6253:2012. Furthermore, the hydrogenated nitrile rubber having carbon-carbon double bonds in its main chain was subjected to a halogenation treatment to form a hydrocarbon-based hydrophobic layer 2. Then, the surface of the hydrocarbon-based hydrophobic layer 2 was provided with a DLC layer having a coat thickness of 1 µm as an amorphous carbon coat 3, so as to secure a sticking force. The other conditions were substantially the same as in Example 1.

### [Example 3]

As for the nip roller 5, a roller surface as in Example 2 was subjected to the cutting of rubber of the roller surface so that the diameter becomes smaller toward the roller ends, that is, so as to form conical shapes that extend from taper start points that are locations that are 150 mm inward from the end edges of the roller surface, at 1.5° from a cylinder horizontal surface of the roller in the axis direction of the roller surface parallel to the center rotation axis of the roller to an axis center side. The other conditions were substantially the same as in Example 1.

### [Comparative Example 1]

As for the nip roller 5, one obtained by covering a core 4 made of a material STKM13A with a 10-mm-thick silicone rubber having a hardness of 70° was used but a DLC coating, which is an amorphous carbon coat, was not formed. The other conditions were substantially the same as in Example 1.

### [Comparative Example 2]

As for the nip roller 5, a silicone rubber without a DLC layer which was substantially the same as the silicone rubber in Comparative Example 1 was subjected to the cutting-out of rubber of the roller surface so as to form conical shapes that extend from taper start points that were locations that were 150 mm inward from the end edges of the roller surface, at 1.5° from a cylinder horizontal surface of the roller in the axis direction of the roller surface parallel to the center rotation axis of the roller to an axis center side. The other conditions were substantially the same as in Example 1.

### [Comparative Example 3]

As for the nip roller 5, a roller substantially the same as the roller shown in Fig. 3 was used and the rubber layer 3 was 10 mm thick and of a nitrile rubber having a hardness of 70°. Since the nitrile rubber has carbon-carbon double bonds in its main chain, the nitrile rubber was subjected to a halogenation treatment to form a hydrocarbon-based hydrophobic layer 2. Then, the surface of the hydrocarbon-based hydrophobic layer 2 was provided with a DLC layer having a coat thickness of 1 µm as an amorphous carbon coat 3. Furthermore, as for the nitrile rubber, unlike the silicone rubber in Example 1 and the hydrogenated nitrile rubber in Examples 2 and 3, the change in hardness in a heat aging test at 150°C for 72 hours according to JIS K6257:2010 is 18 degrees, which is greater than or equal to 15 degrees, in the type A durometer hardness according to JIS K6253:2012. Specifically, degradation of the rubber at high temperature conspicuously occurred resulting in a changed hardness. The other conditions were substantially the same as in Example 1.

### [Evaluation Method for Heat Resistance]

Test pieces having dimensions of 40 mm × 40 mm × 10 mm were manufactured from a rubber sheet formed in substantially the same manner as a rubber material for covering a roller. According to JIS K6257:2010, after the heat aging test was performed at 150°C for 72 hours, the hardnesses of the test pieces were measured. By comparing the hardnesses before and after the test, heat resistances of the test pieces were evaluated.
A (good): The change in the hardness between before the test and after the test was less than or equal to 15 degrees in the type A durometer hardness according to JIS K6253:2012.
C (poor): The change in the hardness between before the test and after the test exceeded 15 degrees in the type A durometer hardness according to JIS K6253:2012.

### [Evaluation Method for Wipe Resistance]

With regard to the sticking property between the rubber and the DLC coating, the durability at the time of wiping the surface with water-soaked waste cloth was evaluated. Waste cloth was pressed against a nip roller at a pressing load of 100g/cm² and was moved back and forth 10 times to perform the wiping. With regard to the wipe resistance, evaluation was performed with the following two grades.
A (good): The waste cloth did not have attachment and no falling-off of the DLC coating was seen.
C (poor): The waste cloth had attachment. Alternatively, falling off of the DLC coating was seen.

### [Evaluation Method for Abrasion Resistance]

The diameter of the nip roller after a 720-hour use was measured and abrasion resistance was evaluated. The locations of measurement was locations that were 150 mm inward from the end edges of the roller and that corresponded to the locations of the film edge portions.
A (good): The rate of change in the outside diameter of the nip roller between before and after the use was less than 0.1%.
B (fair): The rate of change in the outside diameter of the nip roller between before and after the use was greater than or equal to 0.1% and less than 1.0%.
C (poor): The rate of change in the outside diameter of the nip roller between before and after the use was greater than or equal to 1.0%.

### [Evaluation Method for Roller's Life]

With regard to the nip rollers whose rates of change in the outside diameter between before use and after the 720-hour use were 0.1% in the evaluation of abrasion resistance, the diameters of the nip rollers after a 2160-hour use were measured and the life of each roller was evaluated. The locations of measurement on the roller were locations that were 150 mm inward from the end edges of the roller and that corresponded to film edge portions.
A (good): The rate of change in the outside diameter of a nip roller between before and after the use was less than 0.1%.
B (fair): The rate of change in the outside diameter of a nip roller before and after the use was greater than or equal to 0.1% and less than 1.0%.
C (poor): The rate of change in the outside diameter of a nip roller before and after the use was greater than or equal to 1.0%.

### [Evaluation Method for Defect Due to Abrasion Powder]

An obtained film roll was unwound and defects attached to the film surface were detected by a defect detecting apparatus. The defect detecting apparatus was made up of illumination means, light reception means, and defect detection means. As the illumination means, a 350-W metal halide light source, an optical fiber bundle, and rod lighting were used and the lengthwise direction of the rod lighting was tilted 20 degrees from the film width direction in a plane parallel to the film surface. In a view from the film conveying direction, the left side was tilted to a downstream side in the film conveying direction. High-directivity light directed from the rod lighting was directed vertically upward and was adjusted so as to be substantially uniform in the lengthwise direction. As the light reception means, a line sensor camera of 7500 pixels, 8-bit gradations, and 40 Hz was used. The aligning direction of photoelectric conversion elements coincides with the lengthwise direction of the illumination means and the light reception center optical axis is tilted 6.5 degrees from a vertically downward. As the defect detection means, a signal obtained from the light reception means was subjected to weighted averaging of 3 × 3 pixels and, after that, with regard to light locations, locations of a threshold value or greater were detected. The threshold value was a value that had been substantially optimized beforehand while defect images were being watched. After defects were detected, microscopic FT-IR was used to analyze adhesion defects and defects due to abrasion powder were evaluated.
A (good): No contamination of a film roll having defects due to abrasion powder of rubber and the falling-off of the DLC coating.
B (fair): The number of defects caused by the abrasion powder of the rubber and the falling-off of the DLC coating was less than 1.0/m².
C (poor): The number of defects caused by the abrasion powder of the rubber and the falling-off of the DLC coating was greater than or equal to 1.0/m².

### [Table 1]

**[Table 1]**

| | Rubber material | With or without DLC process | With or without carbon-carbon double bond in main chain | With or without hydrophobic layer | With or without tapering | Results of evaluation | | | | |
|---|---|---|---|---|---|---|---|---|---|---|
| | | | | | | Heat resistance | Wipe resistance | Abrasion resistance | Roller life | Defects by abrasion powder |
| Example 1 | Silicone rubber | With | Without | Without | Without | A | A | B | C | B |
| Example 2 | Hydrogenated nitrile rubber | With | With | With | Without | A | A | A | B | A |
| Example 3 | Hydrogenated nitrile rubber | With | With | With | With | A | A | A | A | A |
| Comparative example 1 | Silicone rubber | Without | Without | Without | Without | A | - | C | - | C |
| Comparative example 2 | Silicone rubber | Without | Without | Without | With | A | - | C | - | C |
| Comparative example 3 | Nitrile rubber | With | With | With | Without | C | A | C | - | C |

The examples and the comparative examples will be all compared. In each of Examples 1 to 3, because the surface layer of the nip roller employed a material having a change in hardness in a heat aging test at 150°C for 72 hours according to JIS K6257:2010 which was less than or equal to 15 degrees in the type A durometer hardness according to JIS K6253:2012, the heat resistance was good. Furthermore, because the outermost layer was provided with a layer of a DLC coating strong against abrasion, synergistic effects thereof inhibited abrasion in the drawing process in the production processes of the film roll, achieving a longer roller life, a lengthened cycle of replacement, and improved productivity. Particularly in Example 2, the carbon-carbon double bonds of the hydrogenated nitrile rubber were subjected to a halogenation treatment to form a hydrocarbon-based hydrophobic layer, so that the force of sticking to the DLC coating improved and the even higher abrasion resistance prevented defects and achieved an increased life span. Example 3 was further subjected to a tapering process and exhibited small increases in advantageous effects. On the other hand, in Comparative Examples 1 and 2, despite the use of a silicone rubber having heat resistance, the lack of a layer of a DLC coating allowed abrasion to occur. In Comparative Example 3, although a layer of a DLC coating was formed in close contact via a hydrophobic layer, the rubber itself lacked sufficient heat resistance, resulting in considerable abrasion degradation.

Thus, according to the invention, the use of a nip roller having heat resistance and abrasion resistance reduces the abrasion of the nip roller in a process which involves the heating of a film and in which high load acts, so that a long period of use becomes possible. Furthermore, a film roll with reduced defects caused by abrasion powder from the nip roller can be provided.

### Industrial Applicability

The invention is applicable not only to a nip roller but also to a method for manufacturing an amorphous carbon coat that produces high heat resistance and great sticking property in the processing for an amorphous carbon coat performed on a rubber substrate, and the like.

### Explanation of Numerals

- 1:: Rubber layer
- 2:: Hydrocarbon-based hydrophobic layer
- 3:: Amorphous carbon coat (DLC coating)
- 4:: Core
- 5:: Nip roller
- 6:: Die
- 7:: Sheet-shaped molten resin
- 8:: Cooling drum
- 9:: Guide roller
- 10:: Film
- 11:: Air cylinder
- 12:: Film roll
- 13:: Pre-heating roller
- 14a:: Drawing roller
- 14b:: Drawing roller
- 15:: Cooling roller
- 16:: Winding core
- A:: Conveying direction

## Claims

1. A roller for forming a thermoplastic resin film (5), wherein a surface of a substantially cylindrical core (4) is provided with a layer of a rubber (1), the rubber has a change in hardness in a heat aging test at 150°C for 72 hours according to JIS K6257:2010 which is less than or equal to 15 degrees in type A durometer hardness according to JIS K6253:2012 and a surface of the layer of the rubber (1) is provided with a layer of an amorphous carbon coat (3), wherein the rubber has in a main chain a carbon-carbon double bond, and a hydrocarbon-based hydrophobic layer (2) is formed between the rubber layer (1) and the layer of the amorphous carbon coat (3), **characterized in that** the rubber is a hydrogenated nitrile rubber.

2. The roller for forming a thermoplastic resin film (5) according to Claim 1, wherein a roller surface parallel to a center rotation axis of the roller is provided with a linear or curved cut-out portion formed so that a diameter of the roller (5) becomes smaller toward a roller end.

3. A production method for a film roll in which a process where a sheet-shaped molten resin (7) prior to the forming of a thermoplastic resin film or a thermoplastic resin film at 70°C or higher is nipped between a nip roller (5) and a conveying roller and conveyed or processed is carried out and then the film is wound up into a roll shape, wherein the nip roller (5) is the roller according to Claim 1 or 2.

4. A production method for a film roll (12) in which a process where a thermoplastic resin film at 70°C or higher is nipped between a nip roller (5) and a conveying roller and drawn is carried out and then the film is wound up into a roll shape, wherein the nip roller (5) is the roller according to Claim 1 or 2.

## Patentansprüche

1. Walze zum Bilden einer thermoplastischen Harzfolie (5), wobei eine Oberfläche eines im Wesentlichen zylindrischen Kerns (4) mit einer Schicht aus einem Kautschuk (1) versehen ist, wobei der Kautschuk bei einem Wärmealterungstest bei 150 °C für 72 Stunden gemäß JIS K6257: 2010 eine Änderung der Härte aufweist, was einer Durometerhärte vom Typ A von kleiner gleich 15 Grad gemäß JIS K6253:2012 entspricht, und eine Oberfläche der Schicht des Kautschuks (1) mit einer Schicht einer amorphem KohlenstoffBeschichtung (3) versehen ist, wobei
der Kautschuk in einer Hauptkette eine Kohlenstoff-Kohlenstoff-Doppelbindung aufweist, und eine hydrophobe Schicht (2) auf Kohlenwasserstoffbasis zwischen der Kautschukschicht (1) und der Schicht aus einer amorphen Kohlenstoffbeschichtung (3) gebildet ist.
**dadurch gekennzeichnet, dass** der Kautschuk ein hydrierter Nitrilkautschuk ist.

2. Walze zum Bilden einer thermoplastischen Harzschicht (5) nach Anspruch 1, wobei eine Walzenoberfläche parallel zu einer Mitteldrehachse der Walze mit einem linearen oder gekrümmten Ausschnittabschnitt versehen ist, der so ausgebildet ist, dass ein Durchmesser der Walze (5) zu einem Walzenende hin abnimmt.

3. Verfahren zum Herstellen einer Folienrolle, wobei ein Vorgang, bei dem plattenförmiges geschmolzenes Harz (7) vor dem Bilden einer thermoplastischen Harzfolie oder einer thermoplastischen Harzfolie bei 70 °C oder darüber zwischen einer Andruckwalze (5) und einer Förderwalze eingeklemmt und befördert oder verarbeitet wird, ausgeführt wird, und die Folie danach in Rollenform aufgewickelt wird, wobei die Andruckwalze (5) die Walze gemäß Anspruch 1 oder 2 ist.

4. Verfahren zum Herstellen einer Folienrolle (12), wobei ein Prozess, bei dem eine thermoplastische Harzfolie bei 70 °C oder darüber zwischen einer Andruckwalze (5) und einer Förderwalze eingeklemmt und gezogen wird, ausgeführt wird, und die Folie danach in Rollenform aufgewickelt wird, wobei die Andruckwalze (5) die Walze nach Anspruch 1 oder 2 ist.

## Revendications

1. Rouleau pour former un film de résine thermoplastique (5), dans lequel une surface d'un noyau essentiellement cylindrique (4) est pourvue d'une couche d'un caoutchouc (1), le caoutchouc présente un changement de dureté dans un test de vieillissement thermique à 150°C pendant 72 heures selon la norme JIS K6257:2010 qui est inférieur ou égal à 15 degrés en termes de dureté au duromètre de type A selon la norme JIS K6253:2012 et une surface de la couche du caoutchouc (1) est pourvue d'une couche d'un revêtement de carbone amorphe (3), dans lequel
le caoutchouc présente dans une chaîne principale une double liaison carbone-carbone, et une couche hydrophobe à base d'hydrocarbure (2) est formée entre la couche de caoutchouc (1) et la couche du revêtement de carbone amorphe (3),
**caractérisé en ce que** le caoutchouc est un caoutchouc nitrile hydrogéné.

2. Rouleau pour former un film de résine thermoplastique (5) selon la revendication 1, dans lequel une surface de rouleau parallèle à un axe de rotation central du rouleau est pourvue d'une partie découpée linéaire ou incurvée formée de sorte qu'un diamètre du rouleau (5) devienne plus petit vers une extrémité de rouleau.

3. Procédé de production d'un rouleau de film dans lequel un procédé où une résine fondue en forme de feuille (7) avant la formation d'un film de résine thermoplastique ou un film de résine thermoplastique à 70°C ou plus est pincé(e) entre un rouleau pinceur (5) et un rouleau de transport et transporté(e) ou traité(e) est réalisé, puis le film est enroulé en une forme de rouleau, où le rouleau pinceur (5) est le rouleau selon la revendication 1 ou 2.

4. Procédé de production d'un rouleau de film (12) dans lequel un procédé où un film de résine thermoplastique à 70°C ou plus est pincé entre un rouleau pinceur (5) et un rouleau de transport et étiré est réalisé puis le film est enroulé en une forme de rouleau, où le rouleau pinceur (5) est le rouleau selon la revendication 1 ou 2.
